# EUROPEAN PATENT SPECIFICATION

(11) **EP 1 931 174 B1**
(45) Date of publication and mention of the grant of the patent: **18.01.2012**
(21) Application number: 06764372.6
(22) Date of filing: 01.06.2006
(51) Int. Cl.: H05B 1/02, H05B 3/74, G05D 23/27

(54) **CONTROL DEVICE FOR COOKING APPLIANCES AND COOKING APPLIANCE EQUIPPED WITH SAID DEVICE**
STEUERVORRICHTUNG FÜR GARGERÄTE UND DAMIT AUSGESTATTETES GARGERÄT
DISPOSITIF DE REGULATION POUR APPAREIL DE CUISINE ET APPAREIL DE CUISINE EQUIPE DUDIT DISPOSITIF

(30) Priority: 28.09.2005 ES 200502343
(43) Date of publication of application: 11.06.2008
(73) Proprietor: Ortiz Murat, Laura, 08022 Barcelona (ES)
(72) Inventor: Ortiz Murat, Laura, 08022 Barcelona (ES)
(74) Representative: Pons Ariño, Angel
(86) International application number: PCT/ES2006/000320
(87) International publication number: WO 2007/036582

(56) References cited:
- EP-A2- 0 563 698
- EP-A2- 1 505 350
- WO-A1-86/00179
- WO-A1-89/08300
- WO-A1-96/12220
- DE-A1- 19 522 300
- DE-U1- 29 606 089
- ES-T3- 2 215 794
- GB-A- 2 072 334
- US-A- 4 614 441
- US-A- 6 133 552

## Description

The present invention refers to a control device for cooking apparatus, and also to cooking apparatus including said device.

In particular the present invention relates to a device for controlling frying on cooking utensils, although the present invention is not limited to said application.

The use of oils for frying presents the problem of degradation of same. Unused edible oils, such as olive oil for example, as their temperature rises above a specific temperature (generally 160-180°, 180°C for olive oil), begin to degrade and to produce toxins harmful to health. However, adequate frying requires the use of the greatest possible temperature.

In addition, it is relatively unknown to domestic users that used oils start producing substances that are not recommended for the health of the population in general at temperatures lower than unused oils (customarily above 100°C). However, it is extremely difficult, using the means known at present, to control and maintain a low oil temperature without exceeding a specific limit, since this requires constant and dangerous human intervention, and the desired results are not guaranteed. Moreover, frying with oils involves a high risk, inasmuch as the hot oil can produce severe burns, or a frying-pan left unattended on the heat may produce toxic fumes and also may start a fire.

WO 96/12220 discloses a temperature control device according to the precharacterising portion of claim 1 wherein a sensor module is mounted tilt-shifted on the extraction fan including a guide lever by means of which the sensor module can be brought manually to a position of alignment with a given point. Subsequently, said sensor module can be directed onto a desired point, for instance, towards an edge of a cooking vessel or onto a point in liquid contained in said vessel placed on one of the heating zones. That sensor arrangement in a tilt-shifted position cannot ensure a real measurement of liquids contained in a cooking vessel when said cooking vessel has a certain height because it would measure the temperature of a lateral wall of said cooking vessel.

In order to provide a solution to the drawbacks mentioned above, the present invention discloses a device which makes it possible to control, effectively, the temperature of the food that is being cooked. Moreover, the present invention achieves its aims conveniently and simply, in a manner which is inexpensive and applicable both to domestic environments and to the hotel industry and food industry in general, allowing the users of the cooking apparatus safely to cease worrying at all about frying-pans and other similar items placed on hotplates or stoves.

In particular, the present invention consists of a control device for a cooking apparatus, of the type which comprises at least one hotplate intended to transmit heating power, which comprises:
- a temperature sensor by means of infrared rays located above the hotplate, and capable of detecting infrared radiation issuing from the area above the hotplate, which corresponds, in use, to the interior of a frying utensil located on the hotplate;
- a control unit which receives the signal from the temperature sensor and compares it with a desired temperature value;
- an automatic control system for controlling the heating power which the cooking apparatus transmits to the frying utensil via the hotplate;
the control unit being provided with means for generating commands to the automatic control system for controlling the heating power transmitted, such that the contents located in the aforesaid area above the hotplate do not exceed the desired temperature value.

In the present description, the term cooking refers to any food preparation process which involves the transfer of heat via the lower surface of a specific utensil which contains the food to be prepared. Whereas the term frying is used for those preparation processes which involve the use of oil or an equivalent fatty substance as a means of transmitting the heating power to the food to be prepared, including both frying per se and processes for producing sautés, etc.

With the device of the present invention it is possible to ensure that the oil in a frying utensil, for example a frying-pan, does not exceed a specific desired value starting from which the production of undesirable substances may commence within the frying oil, thus improving the health of the population and allowing the user safely to cease worrying about the frying-pan placed on the heat.

Preferably, the device will also be provided with an interface with the user which allows the user to vary the desired temperature. More preferably, said interface will be located on the same constructional unit as the hotplate or hotplates of the cooking apparatus.

In a preferred embodiment, the infrared sensors will be located vertically above the hotplates, more preferably in the fume extractor hood of the cooking apparatus.

Preferably, the control unit of the device will have means for calculating the thermal inertia of the contents of the interior of the frying utensil and for regulating the aforesaid heat transfer according to the inertia calculated.

The present invention will be applicable especially to cooking apparatuses of the glass-ceramic type.

The device of the present invention will be especially suitable for carrying out frying or similar processes in which the foods must be heated slowly without their temperature exceeding a maximum temperature. In this way it is possible to ensure, in a manner accessible to the final consumer, not only the non-production of substances not recommended for the health of the users but also that, in addition, precise and constant control of the frying conditions is made possible, so that it is possible to carry out the frying operations at a lower temperature than by means of traditional devices, with the consequent energy saving.

For greater understanding of the invention, drawings of some embodiments of the present invention are appended by way of non-limiting example.
Figure 1 is a perspective view of a cooking apparatus equipped with a device according to the present invention.
Figure 2 is a side view, partially in section, of the cooking apparatus of Figure 1.
Figure 3 is a plan view of an embodiment of a user interface of a device according to the present invention.
Figure 4 is a schematic diagram of the different components of an embodiment of the device according to the present invention.

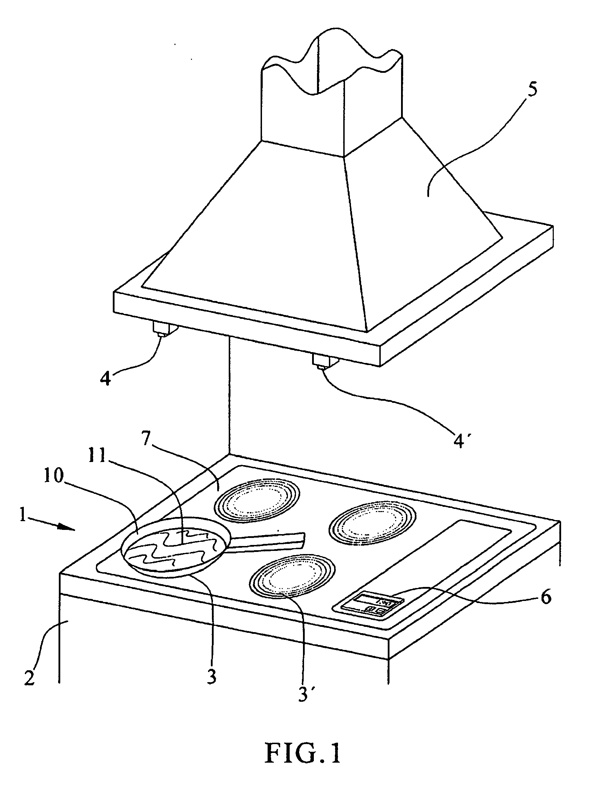

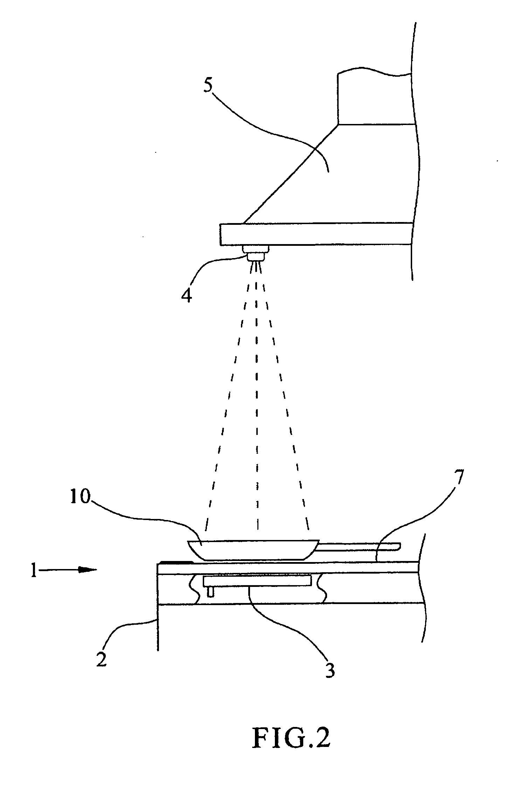

Figures 1 and 2 show a perspective view and a view in side elevation of a cooking apparatus 1 consisting of a constructional unit 2 which has hotplates 3, 3', which in the example shown are located on a hob 7 of the glass-ceramic type. On one of the hotplates 3 there is a frying utensil or frying-pan 10 which has an inner area 11 in which the frying oil is located. The cooking apparatus also has, in this case placed in the extractor hood 5, vertically above the hotplates, a series of infrared sensors 4, 4' intended to measure the temperature of the oil located in the inner space 11 of the frying utensils 10 located on the corresponding hotplates 3, 3', etc. Lastly, the cooking apparatus of the example shown has on the glass-ceramic hob a user interface 6 by means of which the user can vary the desired temperature for the frying oil.

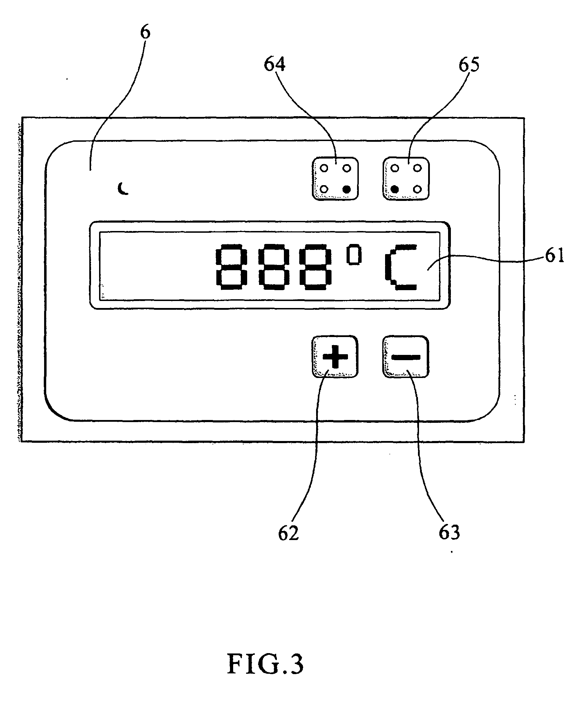

Figure 3 shows in greater detail an embodiment of a user interface 6 for the device of the present invention. Said embodiment has a screen 61 on which it is possible to show the desired temperature, and buttons 61 and 62 which allow the user to alter the desired temperature, in order to adjust the temperature of the oil to the technical and culinary requirements of the dish being prepared. In operation, and when the temperature measured is below the desired value, the screen 61 can for example show, by flashing, the temperature measured by the sensor 4. When the user presses one of the buttons 62, 63, the screen can show the desired temperature stored in the control unit of the device. The user interface may also include optical and/or acoustic warnings for various situations: pressing of button, desired temperature below the temperature measured, or desired temperature reached. In the case shown, the interface also has buttons 64, 65 which, when pressed, cause the screen to show the values corresponding to each of the hotplates 3, 3' which have temperature sensors 4, 4'.

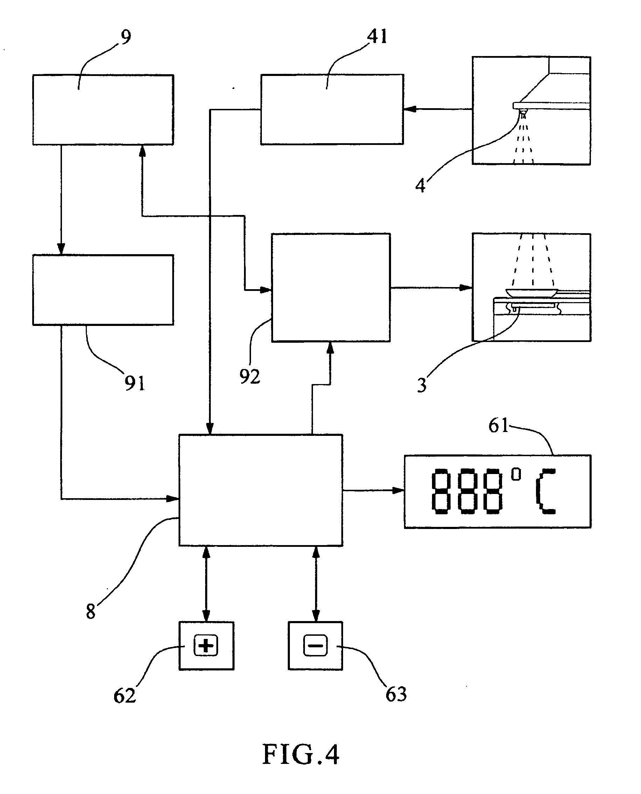

Figure 4 is a schematic diagram which shows the relationships between the different elements of the device according to the present invention.

The device has a control unit 8 (which, for example, may be a RISC microchip micro-controller model PIC16F876A with built-in SMD) which receives the reading 41 from the infrared sensors 4. An example of sensors applicable to domestic cooking apparatuses may be the sensor C13B of the company Raytek, while the reading may be taken via an analog/digital converter equipped with a digital filter interposed between the sensor and the control unit. Said control unit 8 also receives the user's indications with reference to the desired temperature, introduced, for example, via the buttons 62 and 63, and controls the temperature display 61 and the on/off control 92 of each hotplate 3. The device is completed by a power source 91 for the different elements of the device. For example, it may be any power source 91 of standard type fed via a mains supply 9 at 230 volts AC 50/60 Hz and with outputs regulated to 12 and 5 volts for the different components. In general, the on/off control 92 will be supplied directly from the mains supply 9.

A possible functioning of the device of the present invention is as follows. The control unit 8 stores the desired temperature value and receives continuous temperature readings from the area 11 in which the food being cooked is located, comparing both values. According to the difference between said values, the control unit regulates the on/off control 92 of the glass-ceramic hob 3. Since the aim is for the oil not to exceed the desired temperature at any time, programming may preferably take into account the heating inertia of the system in order to switch off the hotplate 3 before the desired temperature is reached. For this purpose, the control unit 8 may be programmed so that it calculates the heating inertia of the system according to the development of the temperatures measured and optimises the switching-off of the hotplate. In this way, if the product heated (normally oil) undergoes temperature losses due to draughts or the incorporation of foods at a lower temperature, the system will react immediately and precisely to the drop in temperature. If this value is small, a gentle switching-on of the heating means will take place. On the other hand, if there is a big difference, the switching-on will be higher in order to be able to bring the actual temperature more rapidly up to the desired temperature.

Logically, in the case where the device has a plurality of infrared sensors for different hotplates, the control unit will control the power transmitted via each of the hotplates, according to the signal from the infrared sensor corresponding to said hotplate.

## Claims

1. A control device for a cooking apparatus **(1),** of the type which comprises at least one hotplate **(3)** intended to transmit heating power, **characterized in that** it comprises:
- a temperature sensor **(4)** by means of infrared rays located above the hotplate **(3),** and capable of detecting infrared radiation issuing from the area above the hotplate **(3)** which corresponds, in use, to the inner area of a frying utensil **(10)** located on the hotplate **(3);**
- a control unit **(8)** which receives the signal from the temperature sensor **(4)** and compares it with a desired temperature value;
- an automatic control system for controlling the heating power which the cooking apparatus **(1)** transmits to the frying utensil **(10)** via the hotplate **(3);**
the control unit **(8)** having means for generating commands to the automatic control system for controlling the heating power transmitted, such that the contents located in the aforesaid area above the hotplate **(3)** do not exceed the desired temperature value;
wherein the infrared sensor **(4)** is located vertically above the hotplate **(3)** of the cooking apparatus **(1).**

2. A device according to claim 1, **characterized in that** it comprises a plurality of infrared sensors **(4,4')** which send the signal detected by the latter to the control unit **(8),** the power transmitted through each of the hotplates (3,3') being controlled via said control unit **(8)** according to the signal from a corresponding infrared sensor **(4,4').**

3. A device according to claim 1 or 2, **characterized in that** it also comprises a user interface **(6)** which allows the user to vary the desired temperature.

4. A device according to claim 3, **characterized in that** said interface **(6)** is arranged on the same constructional unit as the hotplate or hotplates **(3,3')** of the cooking apparatus **(1).**

5. A device according to claim 5, **characterized in that** the sensor or sensors **(4,4')** is/are located in the extractor hood **(5)** of the cooking apparatus **(1).**

6. A device according to any one of claims 1 to 5, **characterized in that** the control unit **(8)** has means for calculating the thermal inertia of the contents of the interior of the frying utensil **(10)** and for regulating the aforesaid heat transfer according to the inertia calculated.

7. A cooking apparatus **(1)**, **characterized in that** it comprises a device according to any one of claims 1 to 6.

8. A cooking apparatus **(1)**, according to claim 7, **characterized in that** it is of the glass-ceramic type.

## Patentansprüche

1. Ein Steuergerät für ein Kochgerät (1) von der Art, das mindestens eine Herdplatte (3) umfasst, die dazu bestimmt ist, Heizleistung zu übertragen, **dadurch gekennzeichnet, dass** es Folgendes umfasst:
- ein Infrarotstrahlentemperatursensor (4), der sich über der Herdplatte (3) befindet und in der Lage ist, Infrarotstrahlung wahrzunehmen, welche von dem Bereich über der Herdplatte (3) ausgesendet wird, welcher in Gebrauch dem Innenbereich eines auf der Herdplatte (3) befindeten Bratgeräts (10) entspricht;
- eine Steuereinheit (8), die die Signale von dem Temperatursensor (4) empfängt und diese mit dem gewünschten Temperaturwert vergleicht;
- ein automatische Steuersystem zur Steuerung der Heizleistung, die das Kochgerät (1) auf das Bratgerät (10) über die Herdplatte (3) überträgt;
wobei die Steuereinheit (8) über Mittel zur Ausgabe von Befehlen an das automatische Steuersystem zur Steuerung der übertragenen Heizleistung verfügt, so dass der sich in dem vorstehend genannten Bereich über der Herdplatte (3) befindete Inhalt, den gewünschten Temperaturwert nicht übersteigt;
wobei der Infrarotsensor (4) vertikal über der Herdplatte (3) des Kochgeräts (1) angebracht ist.

2. Ein Gerät nach Anspruch 1, **dadurch gekennzeichnet, dass** es eine Vielzahl von Infrarotsensoren (4, 4') umfasst, welche die von diesen wahrgenommenen Signale an die Steuereinheit (8) senden, wobei die über die einzelnen Herdplatten (3, 3') übertragene Leistung über die besagte Steuereinheit (8) gemäß dem Signal von dem entsprechenden Infrarotsensor (4, 4') gesteuert wird.

3. Ein Gerät nach Anspruch 1 oder 2, **dadurch gekennzeichnet, dass** es außerdem über eine Benutzerschnittstelle (6) verfügt, die es dem Benutzer ermöglicht, die gewünschte Temperatur zu verändern.

4. Ein Gerät nach Anspruch 3, **dadurch gekennzeichnet, dass** die besagte Schnittstelle (6) auf derselben Baueinheit wie die Herdplatte bzw. die Herdplatten (3, 3') des Kochgeräts (1) angebracht ist.

5. Ein Gerät nach Anspruch 5, **dadurch gekennzeichnet, dass** der Sensor oder die Sensoren (4, 4') in der Abzugshaube (5) des Kochgeräts (1) angebracht sind.

6. Ein Gerät nach einem der Ansprüche 1 bis 5, **dadurch gekennzeichnet, dass** die Steuereinheit (8) über Mittel zur Berechnung der Wärmeträgheit der Inhalte im Innern des Bratgeräts (10) und zur Regulierung der vorstehend genannten Hitzeübertragung gemäß der berechneten Trägheit verfügt.

7. Ein Kochgerät (1), **dadurch gekennzeichnet, dass** es ein Gerät gemäß einem der Ansprüche 1 bis 6 umfasst.

8. Ein Kochgerät (1) nach Anspruch 7, **dadurch gekennzeichnet, dass** es in Glaskeramik ausgeführt ist.

## Revendications

1. Un dispositif de commande pour un appareil de cuisson (1), du type de ceux qui comprennent au moins une plaque chauffante (3) destinée à transmettre une puissance calorifique, **caractérisé en ce qu'**il comprend :
- un capteur de température (4) au moyen de rayons infrarouges situé au-dessus de la plaque chauffante (3), et capable de détecter un rayonnement infrarouge en provenance de la zone située au-dessus de la plaque chauffante (3) qui correspond, lors de l'utilisation, à la zone interne d'un ustensile à friture (10) placé sur la plaque chauffante (3) ;
- une unité de commande (8) qui reçoit le signal du capteur de température (4) et le compare à une valeur de température désirée ;
- un système de commande automatique pour contrôler la puissance calorifique que l'appareil de cuisson (1) transmet à l'ustensile à friture (10) via la plaque chauffante (3) ;
l'unité de commande (8) possédant des organes pour générer des instructions en direction du système de commande automatique pour contrôler la puissance calorifique transmise, de façon à ce que les contenus situés dans la zone susmentionnée au-dessus de la plaque chauffante (3) n'excèdent pas la valeur de température désirée ;
dans lequel le capteur infrarouge (4) est situé à la verticale au-dessus de la plaque chauffante (3) de l'appareil de cuisson (1).

2. Un dispositif selon la revendication 1, **caractérisé en ce qu'**il comprend une pluralité de capteurs infrarouges (4, 4') qui envoient le signal détecté par ces derniers à l'unité de commande (8), la puissance transmise via chacune des plaques chauffantes (3, 3') étant contrôlée par ladite unité de commande (8) en fonction du signal provenant d'un capteur infrarouge (4, 4') correspondant.

3. Un dispositif selon la revendication 1 ou 2, **caractérisé en ce qu'**il comprend aussi une interface utilisateur (6) qui permet à l'utilisateur de modifier la température désirée.

4. Un dispositif selon la revendication 3, **caractérisé en ce que** ladite interface (6) est installée sur la même unité de construction que la ou les plaques chauffantes (3, 3') de l'appareil de cuisson (1).

5. Un dispositif selon la revendication 5, **caractérisé en ce que** le ou les capteurs (4, 4') est/sont situés dans la hotte d'évacuation (5) de l'appareil de cuisson (1).

6. Un dispositif selon l'une quelconque des revendications 1 à 5, **caractérisé en ce que** l'unité de commande (8) possède des organes pour calculer l'inertie thermique des contenus se trouvant à l'intérieur de l'ustensile à friture (10) et pour réguler le transfert de chaleur susmentionné en fonction de l'inertie calculée.

7. Un appareil de cuisson (1) **caractérisé en ce qu'**il comprend un dispositif selon l'une quelconque des revendications 1 à 6.

8. Un appareil de cuisson (1), selon la revendication 7, **caractérisé en ce qu'**il est de type vitrocéramique.
